# EUROPEAN PATENT SPECIFICATION

(11) **EP 1 788 095 B1**
(45) Date of publication and mention of the grant of the patent: **13.04.2011**
(21) Application number: 06114103.2
(22) Date of filing: 17.05.2006
(51) Int. Cl.: C12Q 1/68

(54) **Reaction chamber for real time PCR comprising capture probes and permitting detection of the PCR product by hybridisation without opening the PCR vessel**
Reaktionsgefäss zur Real-time PCR umfassend Oligonukleotidproben wobei die Amplifikationsprodukte durch Hybridisierung und ohne Öffnen des Reaktionsgefässes gemessen werden
Un tube pour PCR en temps réel comprenant des olgionucléotides de capture permettant la détection de l'amplificat par hybridation sans ouvrir ledit tube de PCR

(30) Priority: 18.11.2005 WO PCT/EP2005/012382
(43) Date of publication of application: 23.05.2007
(73) Proprietor: Eppendorf Array Technologies SA, 5000 Namur (BE)
(72) Inventor: Remacle, Jose, 5020 Malonne (BE); Alexandre, Isabelle, 5340 Haltinne (BE); Koehn, Heinz, 22339 Hamburg (DE); Seippel, Martin, 22391 Hamburg (DE)
(74) Representative: Rasser, Jacobus Cornelis

(56) References cited:
- WO-A-2004/101733
- WO-A2-01/27327
- CN-A- 1 448 500
- LEHR H-P ET AL: "REAL-TIME DETECTION OF NUCLEIC ACID INTERACTIONS BY TOTAL INTERNAL REFLECTION FLUORESCENCE" ANALYTICAL CHEMISTRY, AMERICAN CHEMICAL SOCIETY. COLUMBUS, US, vol. 75, no. 10, 15 May 2003 (2003-05-15), pages 2414-2420, XP001170913 ISSN: 0003-2700
- LEHR H-P ET AL: "Modeling and experimental verification of the performance of TIRF-sensing systems for oligonucleotide microarrays based on bulk and integrated optical planar waveguides" SENSORS AND ACTUATORS B, ELSEVIER SEQUOIA S.A., LAUSANNE, CH, vol. 92, no. 3, 15 July 2003 (2003-07-15), pages 303-314, XP004427496 ISSN: 0925-4005
- "Flushing-free PCR amplification tube capable of directly detecting gene" WPI/THOMSON,, 1 January 2004 (2004-01-01), XP007909442

## Description

### BACKGROUND OF THE INVENTION

### 1. Field of the Invention

The present invention relates to a closed device for performing a polymerase chain reaction (PCR) of a nucleotide sequence together with its detection on immobilized capture molecules. More particularly, the device is useful for monitoring the amplification of the sequence in real-time. The present invention allows the identification and the quantification of specific genes or organisms by amplification and detection performed in a one step assay.

### 2. Description of the Related Art

Detection and quantification of an organism, or a part of it such as a gene, is best performed using the molecular amplification of the nucleotide sequence followed by its detection. Amplification of a given sequence is performed by several methods such as the polymerase chain reaction (PCR) (U.S. Pat. Nos. 4,683,195 and 4,683,202), ligase chain reaction (LCR) (Wu and Wallace, Genomics, Vol. 4, p.560, 1989) or the Cycling Probe Reaction (CPR) (U.S. Pat. No. 5,011,769) which are the most common.

PCR is the most commonly used method of amplification. PCR uses two oligonucleotide primers, an agent for polymerization, a target nucleic acid template. The successive cycles of denaturation of nucleic acid, annealing and extension of the primers produce large number of copies of a particular nucleic acid segment. Segments of genomic DNA can be amplified up to 10 million fold with very high specificity and fidelity when using optimized conditions.

The PCR are usually performed in a single tubes and in wells being part of a 96-wells or 384 well plate format and are thereafter analyzed for the presence of the amplified sequence known as amplicons.

Methods for detecting PCR products are described in U.S. Pat. No. 4,683,195. These methods require an oligonucleotide probe capable of hybridizing with the amplified target nucleic acid. These methods require separate steps of amplification, capture, and detection and generally require several hours for completion.

Due to the large amplification of the PCR process, small levels of DNA carryover from samples with high DNA content, or from previous amplifications, can produce non specific amplicons even in the absence of purposefully added template DNA. Because the possibility of introducing contaminating DNA to a sample increases with the increased number of handling steps required for sample preparation, processing, and analysis is increased, it is preferable to minimize sample handling for their detection and quantification, particularly after the amplification reaction is complete.

Methods and devices for simultaneous amplification and detection of target nucleic acids have been described aimed at minimizing the problems of sample contamination.

One particular way to detect the presence of a given target nucleic acid sequence, and thus of a particular organism, is to monitor the appearance of amplicons during the PCR cycles. The method is called real time PCR. The method gives the possibility of quantifying the amplified sequence as the cycles progress, and to calculate the amount of the sequence in the original sample. The method uses a homogeneous format, and the PCR and the detection are performed within one tube. Performing both amplification and detection in a closed chamber lowers the contamination risk caused by opening the tubes in conventional post-PCR detection methods.

One way to assay for the presence of the amplicons is to take advantage of certain intercalating dyes, the fluorescence of which increases, or changes its parameters, when the dye is intercalated into double stranded DNA. One to the most commonly used dye is SYBR green. The method assays for the amount of double stranded DNA, mainly the amplicons present in the solution. U.S. Pat. No. 4,683,195 and U.S. Pat. No. 6,171,785 also use the introduction of detectable DNA binding agents (such as ethidium bromide) into the amplification reaction, which agents produce a detectable signal in the PCR solution that is enhanced upon binding double-stranded DNA. An increase in fluorescence of the PCR mixture indicates that amplification has occurred. In order to be useful the amplification has to be very specific since non specific amplifications will also lead to a signal.

U.S. Pat. 6,814,934 also proposed an instrument for the detection in real-time of the fluorescent increase occurring in the solution mixture, resulting from the formation of double stranded amplicons during the PCR cycles.

The best detection method for PCR product available to date is based on the use of probes specific of the amplicons, of which the fluorescence varies or is released when the amplicons are formed or are present in the solution. Early methods for detecting PCR products have been described in U.S. Pat. No. 4,683,195. These methods require an oligonucleotide probe capable of hybridizing with the amplified target nucleic acid. These methods require separate steps of amplification, capture, and detection and generally require several hours to be completed.

New methods have been developed, including the molecular beacon probes, the double-dye oligonucleotide probes, the Amplifluor or the Scorpions primers and TaqMan probes. Molecular beacons are structurally similar to the tradition single strand hybridization probe except that the ends of the beacon contain equal length self-complementary segments, which, in free state, will bond to each other forming a loop terminated by a blunt end stem. The ends of the stem have a fluorescer attached to one side and a quencher attached to the other side, so that it is self quenching in the unbound state. When the beacon attaches to a target amplicon, the fluorophor and quencher become separated in space allowing the sample to fluoresce. The TaqMan probes are among the most popular specific methods of detection in real time and are commercially available. The TaqMan probe contains both a fluorescer and a quencher in close proximity to one another which inhibits fluorescence in the probe hybridized to the target amplicon or in excess probes in solution. The fluorochrome is released from the vicinity of the quencher by the digestion of the probes during the copying of the amplicon strand by the Taq polymerase having a 5'-3' exonuclease activity. They provide a detectable molecule that accumulates in the solution during the successive cycles.

The use of linear (TaqMan probe) or hairpin (molecular beacon) probes having a quencher and a fluorescer molecule has some important drawbacks. First, the probe is a complicated molecule to synthesize and is expensive. Second, a different fluorescer is necessary for each amplicon to be quantified. This feature limits the number of amplicons possibly detected in the same assay. Third, the distance between the fluorescer and the quencher is crucial to a have an effective quenching of the fluorescer for the free probe. The presence of a secondary structure in the probe may affect the distance between the fluorescer and the quencher and, as a consequence, the free probe is not properly quenched.

U.S. Pat. No. 5,716,784 provides an alternative method based on the use of two complementary probes, a first, analytical probe being labeled at its 5' terminus with an energy transfer donor fluorophore, and a second, detection probe being labeled at its 3' terminus with an energy transfer acceptor fluorophore. Quantitative detection of oligonucleotide analytical probe hybridized in solution to the oligonucleotide detection probe provides a measure of the amount of oligonucleotide analytical probe used up in the amplification of the target nucleic acid sequence and thus provides a measure of amount of target nucleic acid sequence amplified in the PCR replication procedure. The quantitative detection of the analytical probe involves spectrophotometrical energy transfer detection in solution.

U.S. Pat. No. 5,928,907 describes an apparatus for monitoring the formation of a nucleic acid amplification reaction product in real time that uses an optic fiber focused in the volume of the sample. The fluorescence is usually detected in the solution trough the tip or the bottom of the tubes or the wells.

Although these methods are capable of monitoring in real time the quantification of nucleic acids in a homogeneous PCR hybridization system, they are limited to the quantification of one target nucleic acid per fluorescent dye. Multiplexing is not easy to implement due to the fact that the detector has to be able to detect as many fluorescent dyes as there are targets or standards in the solution. This requires the use of non overlapping fluorescent dyes for measuring the increase in signal related to the amplification of several individual target nucleic acid sequences in the same apparatus. In most of the applications, one fluorescent probe is used, and sometimes 2. The use of a larger number of probes would lead to a dramatic increase in the complexity and cost of the detection system since each probe requires specific excitation and the emission wavelengths.

WO 04/101733 and the co-pending application CN 1 448 500 A disclose a wash-free PCR amplification tube for direct gene detection. A molecular beacon is immobilized inside the reaction tube that is designed for the PCR purpose. The PCR tube also comprises a transparent window at the section where the molecular beacon is fixed inside the PCR tube. The immobilized probe comprises a fluorescer and a quencher. The quencher is positioned at the free end of the probe. During the PCR, the quencher is released from the vicinity of the fluorescer by the digestion of the immobilized probes during the copying of the amplicon strand by the Taq polymerase having a 5'-3' exonuclease activity. They provide a detectable molecule that accumulates on the support during the successive cycles.

This method is very close to the real-time PCR performed in solution. In both cases, the probe parties involved in the amplification step.

The use of a molecular beacon as capture molecule (immobilized on a support) presents further drawbacks as compared to the molecular beacon used in solution. As the PCR is performed on a probe that is in the proximity of a solid support, it is much less efficient and more difficult to implement than a PCR performed in solution. The situation is even more dramatic when multiple molecular beacons are used on the same support, such as arranged in a micro-array, to quantify different targets, because the basic fluorescent background (without target) is different from probe to probe. As a result the quantifications of the different targets are difficult to calibrate.

The present invention aims to provide a device for a method that has the advantages of the real time PCR methods described here above using specific probes for the detection, but that overcomes the limitations of single (or very few) detection per assay and/or the complexity of the design of labeled probes having both specificity and physico-chemical constraints such as quenching or FRET.

### BRIEF SUMMARY OF THE INVENTION

The aim of the invention is to provide a device for monitoring a PCR in real-time, in a heterogeneous system, obviating the shortcomings associated with prior art methods. The device is used for a very large number of applications and targets to be detected and offers the possibility to monitor in real time the amplification of a large number of target sequences This in turn makes it possible to detect and quantify, in a single assay, the presence of multiple organisms or genes in the sample and is not limited by the number of fluorochromes, as is the real-time PCR with the detection in solution.

The device according to the invention is defined in claim 1.

The specificity of the detection is given by the hybridization of amplicon on the immobilized capture molecules. Another feature of the invention is that the capture molecules are not taking part in the PCR reaction and thus do not interfere with the PCR happening in the solution.

### BRIEF DESCRIPTION OF THE DRAWINGS

The features and advantages of the invention will be appreciated upon reference to the following drawings, in which:

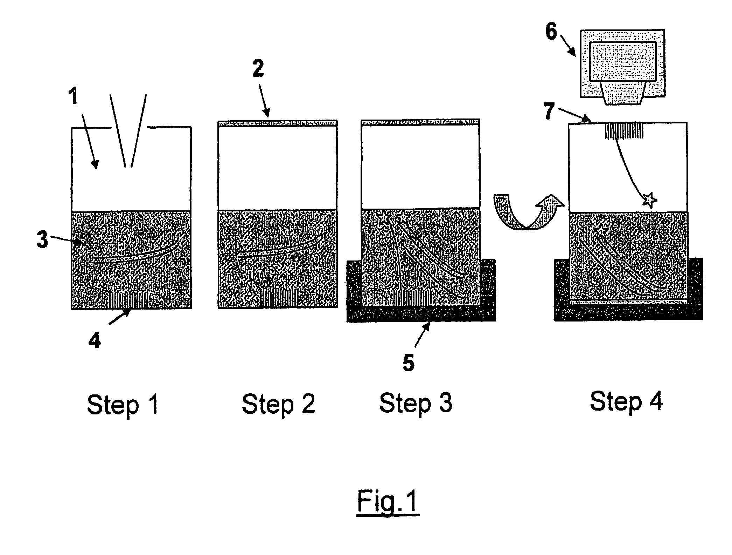

Figure 1 is a representation of a preferred device of the invention having a reaction chamber (1) with one compartment. The device is used in the following method. In step 1, a solution (3) containing the nucleotide molecules and reagents for amplification and labeling are introduced into the reaction chamber (1). Capture molecules (4) are immobilized at the bottom of the reaction chamber (1). In step 2, the reaction chamber is sealed with a lid (2). In step 3, the PCR amplification is performed in the reaction chamber (1), which is in contact with a temperature regulation device (5). The labeled target molecules are present both in solution and hybridized on capture molecule (4). In step 4, the reaction chamber (1) is rotated in order to place the surface carrying the capture molecules in front of the detector (6) and the bound labeled target molecules are measured through a window (7) by the detector (6).

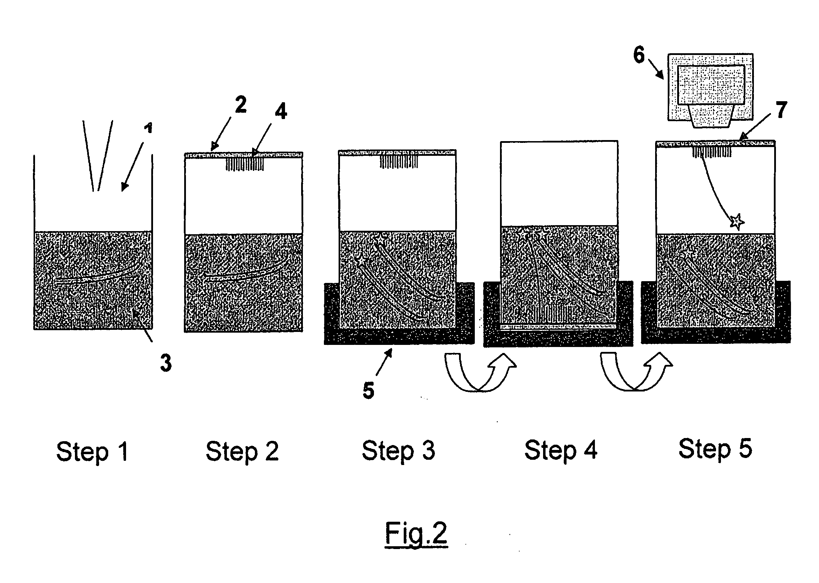

Figure 2 is a representation of a preferred device of the invention having a reaction chamber (1) with one compartment. The device is used in the following method. In step 1, a solution (3) containing the nucleotide molecules and reagents for amplification and labeling are introduced into the reaction chamber (1). In step 2, the reaction chamber is sealed with a lid (2) having fixed upon their surface capture molecules (4). In step 3, the PCR amplification is performed in the reaction chamber (1), which is in contact with a temperature regulation device (5). The labeled target molecules are present in solution and there is no interference with the capture molecules (4). In step 4, the reaction chamber (1) is rotated in order to put the surface carrying the capture molecules in contact with the solution carrying the labeled target molecules. During this step the labeled target molecules hybridize to the capture molecules (4). In step 5 (which is equivalent to step 4 of figure 1), the reaction chamber (1) is rotated in order to place the surface carrying the capture molecules (4) in front of the detector (6) and the bound labeled target molecules are measured through a window (7) by the detector (6).

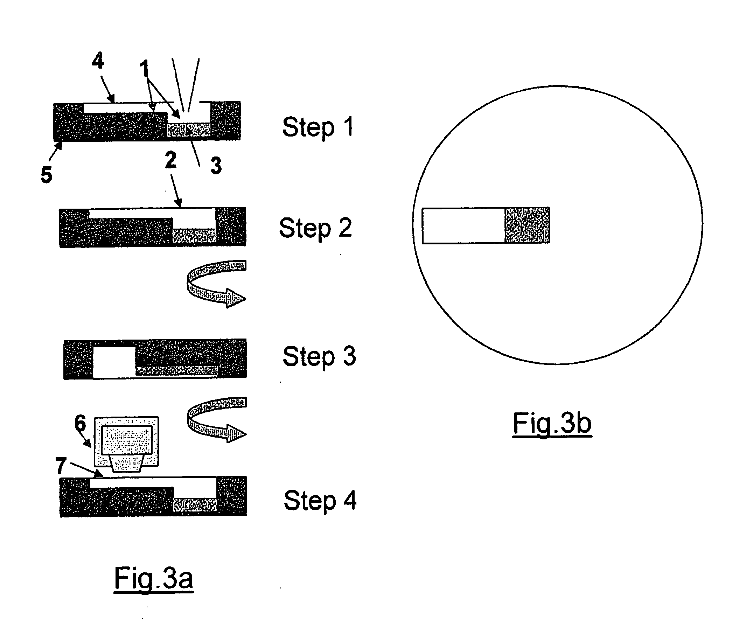

Figure 3 is a representation of a preferred device of the invention having a reaction chamber (1) with two compartments. The device is preferably part of a disk support to allow an easy centrifugation of the device (fig. 3b). The steps of the method in which the device is used are presented in fig.3a. In step 1, a solution (3) containing the nucleotide molecules and reagents for amplification and labeling are introduced into a first compartment of the reaction chamber (1). Capture molecules (4) are immobilized at the top of the second compartment of the reaction chamber (1). In step 2, the reaction chamber is sealed with a lid (2) and the PCR amplification is performed in the first compartment of the reaction chamber (1) which is in contact with a temperature regulation device (5). In step 3, the reaction chamber (1) is centrifuged and flipped in order to contact the solution containing the labeled target molecules with the capture molecules (4) immobilized in the second compartment. In step 4, the chamber (1) is inverted back, and the bound labeled target molecules are measured through a window (7) by the detector (6).

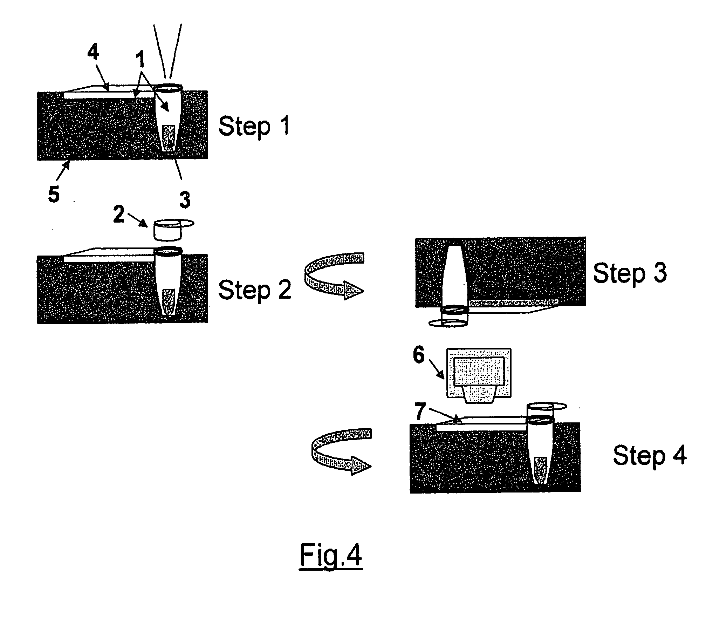

Figure 4 is a representation of an alternative device of the invention, having a reaction chamber (1) with two compartments. The principle of use of the device is the same as provided in figure 3. The first compartment is a microtube and the second compartment, carrying the capture molecules (4), is a flat channel that is connected to the microtube.

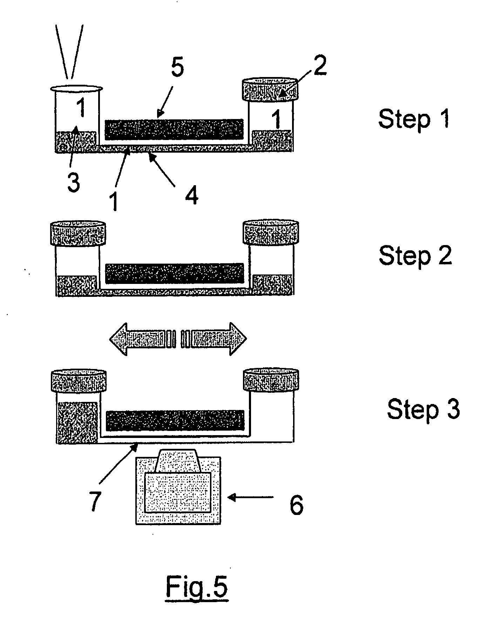

Figure 5 is a representation of a preferred device of the invention having a reaction chamber (1) with three compartments: two compartments separated by a third compartment, which is a channel bearing the capture molecules (4). In step 1, a solution (3) containing the nucleotide molecules and reagents for amplification and labeling are introduced into a first compartment of the reaction chamber (1). The solution (3) diffuses to the second and third compartments by capillarity. In step 2, the first compartment is sealed with a lid (2) and the PCR amplification is performed in the reaction chamber (1), which is in contact with a temperature regulation device (5). During this step, the solution is moved over the capture molecules (4) in order to increase the speed of the binding reaction of the labeled target nucleotide molecule on its capture molecule. This is obtained by rotating, translating or moving up and down the reaction chamber (1) or by increasing-decreasing the pressure in the chamber. In step 3, the reaction chamber (1) is centrifuged in order to remove the solution containing the labeled target molecules from the surface carrying the capture molecules (4), and the bound labeled target molecules are measured through a window (7) by the detector (6).

### DESCRIPTION OF ILLUSTRATIVE EMBODIMENTS

The following is a description of certain embodiments of the invention as specified in claim 1, given by way of example only and with reference to the drawings.

Definitions.
The terms "nucleic acid", "oligonucleotide", "array", "probe", "target nucleic acid", "bind substantially", "hybridising specifically to", "background", and "quantifying" are as described in the international patent application WO97/27317.

The terms "nucleotide triphosphate", "nucleotide", and "primer sequence" are as described in the document WO00/72018.

The terms "Homologous sequences" and "consensus sequence" are described in the European patent application WO01/77372. The term "homology" is intended to mean the degree of identity of one polynucleotide sequence to another polynucleotide sequence. There may be complete homology (i.e. 100% identity) between two or more polynucleotides. The degree of homology is calculated after alignment of the sequence and may be determined by any method well known to a person skilled in the art.

As used herein, "capture molecule" refers to a molecule, or complex or combination of molecules, that is capable of specifically binding to one target molecule, or to a family of target molecules, or to one or more member (s) of a plurality of target molecules, or portion(s) thereof. The capture molecules are preferably nucleic acids, which are either synthesized chemically *in situ* on the surface of the support or synthesized *ex situ* and subsequently affixed to the support. Nucleic acid binding is achieved via base pairing between two polynucleotides, one being the immobilized capture molecule and the other one the target to be detected. Capture molecules also comprise derivatives of the nucleic acid, such as PNA or LNA, as long as they can bind specifically the target polynucleotide molecule.

The term "single capture molecule species" is a composition of related polynucleotides for the detection of a given sequence by base pairing hybridization or by molecular recognition between polypeptides or proteins. Polynucleotides are synthesized either chemically or enzymatically, or isolated from samples, but the synthesis or isolation is not always perfect and the capture molecule is contaminated with other related molecules, like shorter polynucleotides. The essential characteristic of one capture species for the invention is that the overall species can be used for capture of a given target nucleotide molecule.

The term "polynucleotide sequences that are complementary to one or more genes or to the genome sequence" described herein, refers to polynucleotides that are capable of hybridizing under stringent conditions to at least part of the nucleotide sequence of said genes or genome or copy thereof. Polynucleotides also include oligonucleotides (comprising more than 2 bases but fewer than 100 bases), which can be used under particular conditions. Such hybridizable polynucleotides will typically exhibit at least about 75% sequence identity at the nucleotide level to said genes or genome, preferably about 80% or 95% sequence identity or preferably more than 95% nucleotide sequence identity to said genes or genome. They are composed of either small sequences typically 15-30 bases long, or longer ones being between 30 and 100 or even longer, between 100 and 800 bases long, depending on the specificity and sensitivity requirements for the assay.

"Micro-array" means a support on which multiple capture molecules are immobilized in order to be able to bind to the given specific target molecule. The micro-array is preferentially composed of capture molecules present at specifically localized areas on the surface or within the support or on the substrate covering the support. A specifically localized area is the area of the surface that contains bound capture molecules specific for a determined target molecule. The specific localized area is either known from the method that was used in building the micro-array, or is defined during or after the detection. A spot is the area where specific target molecules are fixed on their capture molecules and seen by the detector. The micro-array may also contain detection controls which are labeled. These controls check the performance of the detection and circumvent the array, but they are not used to detect specific target molecules. In one particular application of this invention, micro-arrays of capture molecules are also provided on different supports, as long as the different supports contain specific capture molecules and may be distinguished from each other in order to be able to quantify the specific target molecules. This can be achieved by using a mixture of beads having particular features and being able to be distinguished from each other in order to quantify the bound molecules. One bead or a population of beads is then considered as a spot having a capture molecule specific of one target molecule.

The "amplicon" of the invention means target nucleotide molecules being the result of PCR amplification of a nucleotide molecule present in a biological material.

"Intermittent contact" means to be physically in contact or not according to some time frame. In a particular aspect of the invention the PCR solution is in intermittent contact with the capture molecule, means the PCR solution is moved or displaced from the surface having fixed the capture molecules for a given time period (non contact) and then it is moved back to its original position (contact). Preferably more than 95% and preferably more than 99% of the PCR solution is moved or displaced in the reaction chamber. The PCR solution is preferably displaced by gravity drain resulting from a change in orientation of the reaction chamber, preferably rotation, translation, or lateral movement of the reaction chamber.

Description of a preferred embodiment.

Advantageously, the reaction chamber according to the disclosure contains a window on which multiple capture molecules are fixed in the form of a micro-array having at least 4 different localized areas.

In a preferred embodiment, the amplicons produced during the PCR cycles are labeled during their synthesis, and they are detected through the window of the reaction chamber when bound to the capture molecules immobilized on the chamber surface.

In another preferred embodiment, the chamber is sealable with a lid and the evaporation of the liquid present in the chamber is less than 10% preferably less than 1%, after 35 PCR cycles.

In another preferred embodiment, the reaction chamber is made of solid material resistant to 90°C preferably to 95°C.

In another preferred embodiment, the surface of the window is maintained flat at temperatures higher than 85°C, preferably higher than 95°C. The hybridized amplicons have to be detected by a detector and preferably the different localized area that contain different capture molecules have to show the same signal intensity if bound with the same amount of targets. Thus a preferred embodiment of the reaction chamber is one having a flatness tolerance of the different detected localized areas of the window of less than 100 microns, preferably less than 25 microns.

In a preferred embodiment, the light transmittance of the window at the wavelength used for the detection is higher than 80%, preferably higher than 90%.

In another preferred embodiment, the signal detected trough the window resulting from the binding of the amplicons to the immobilized capture molecules is at least 2 times, preferably at least 5 times, more preferably at least 10 times higher than the signal obtained without binding like in the absence of amplicons or in conditions in which no binding can take place.

In a preferred embodiment, the chamber is thermoregulated with a temperature regulation device located outside the chamber. The temperature regulation device is not present at the window location, to allow the measurement of the bound amplicons.

In a preferred embodiment, the micro-array comprises more than 10 different capture molecules (20), preferably more than 20, more preferably more than 50. They are preferably polynucleotide molecules. Also, the capture molecules preferably have an amplicon-specific binding sequence (capture portion), and a spacer portion bound to the chamber surface. The immobilized capture molecule is preferably a polynucleotide having a capture portion, and a spacer portion of at least 20 nucleotides, preferably at least 50, more preferably more than 90 nucleotides.

In a specific embodiment, the capture molecules are fixed on a surface having sub-compartments. Preferably, each compartment contains different capture molecules. In another embodiment, each compartment contains the same capture molecules. More preferably, the chamber comprises at least 4 different capture molecules that are physically separated in sub-compartments.

In one specific embodiment, the capture molecule is not in fluidic contact with the solution containing the amplicons during the PCR.

In another embodiment, the capture molecule is in fluidic contact with the solution containing the amplicons during the PCR.

In a preferred embodiment, the measurement of the bound labeled amplicons is performed in the absence of liquid. Preferably, the absence of liquid is obtained by gravity drain, such as resulting from changing the orientation of the reaction chamber. For example, changing the orientation of the reaction chamber by a method selected from the group consisting of: rotation, translation, or lateral movement of the reaction chamber. In a particular embodiment, the reaction chamber has two compartments that are in fluidic contact, one for the PCR and the other one containing the window for detection of the bound amplicons.

In another embodiment, the reaction chamber has three compartments being in fluidic contact, two for the PCR and the other one containing the window for detection of the bound amplicons.

In another preferred embodiment, at least one compartment of the reaction chamber (1) or the chamber itself has a shape selected from the group consisting of: a tube, a well, a cavity, and a reservoir.

More particularly, the reaction chamber or a compartment of the chamber is closed by a lid. Preferably, the lid serves as window for the detection of the bound amplicons. According to the invention, the lid comprises or is made of a material selected from the group consisting of glass, metal, polymer (preferably thermo-resistant having low self-fluorescence) or any other material used in the micro-array technology (preferably activated glass bearing aldehyde or epoxide or acrylate groups), said lid comprising also specific coatings, markers or devices (bar codes, electronic devices, etc.) for improving the assay.

Although glass presents many advantages (like being inert and having a low self-fluorescence), other supports such as polymers, with various chemically well-defined groups at their surface allowing the binding of the nucleotide sequences, are useful. In another preferred embodiment, the support bearing the capture molecules has a 3 dimensional porous structure. Conventional glass slides have less than 60% silicon dioxide on their surface. This inherently limits the amount of chemical bonding available on the surface. Porous material exhibits an increased loading capacity of capture molecules. Typical porous supports include gel pads, fused-fiber matrix, and fibrous polymer matrix. The capture molecules can be immobilized entirely in the porous material, or on a layer of porous material mounted on top of a flat surface such as glass, plastic, or metal.

Besides glass, polymers are becoming increasingly used as support for micro-array and for the miniaturisation of biological assays due to the development of the microfluidic technology and the "lab on a chip" concept. In a preferred embodiment, the polymer material of the lid is selected from the group consisting of: polycarbonate (PC), polyethylene (PE), Cycloolefin copolymer (COC), cyclic olefin polymer (COP) or a mixture thereof. A preferred COP product is Zeonex® because of its excellent optical properties, chemical resistance, thermal stability, and low fluorescence. In a preferred embodiment, the lid is thermo-resistant and is maintained flat at a temperature higher than 85°C. In another preferred embodiment, the light transmittance of the lid at the wavelength used for the detection is higher than 80% and even higher than 90%.

In a particular embodiment, the reaction chambers or compartments of the chamber are the wells of a multiwell plate that are separated from each other by a pitch of 4.5 mm or a multiple thereof. Preferably, the reaction chambers or compartments of the chamber are part of a support being a multiwell plate having at least 2, preferably at least 8, more preferably at least 24, still more preferably at least 96, and even more preferably at least 384 chambers.

In a preferred embodiment, the chamber is made of polymer selected from the group consisting of: polycarbonate (PC), polyethylene (PE), Cycloolefin copolymer (COC), cyclic olefin polymer (COP) or a mixture thereof. Preferably the cycloolefin copolymer (COC) or cyclic olefin polymer (COP) is Zeonex® product. In a preferred embodiment, the chamber and/or the window is made of Zeonex®, which has a light transmittance higher than 90% (http ://www.zeonchemicals.com).

In the preferred embodiment, the polynucleotides that used as capture molecule are between 10 and 1000 nucleotides long, preferably between 100 and 400 nucleotides long. For specific binding of homologous sequences possibly present in the same sample, the polynucleotide capture molecules contain a spacer portion according to the patent WO0177372. Specific binding of homologous sequences or SNP possibly present in the same sample, are obtained using capture molecules having a specific part of between 10 and 30 nucleotides.

In a preferred embodiment, the polynucleotides that are used as capture molecules are present on the micro-array localized area at a density superior to 10 fmoles per cm², preferably more than 100 fmoles per cm² surface of the solid support.

The micro-array according to this invention contains between 20 and 1000 spots per cm². Each spot is preferably the localized area for one capture molecule. Miniaturization allows performing one assay upon a large number of surface spots (usually circular spots of about 0.1 to about 1 mm diameter). A low density array, containing 20 to 400 spots is easily obtained at low cost with pins of between 0.2 and 0.4 mm of diameter. Higher density of spots up to 1,600 spots per cm2 can be obtained by reducing the size of the spots for example between 0.1 mm and 0.2 mm diameter. Method for obtaining capture molecules of higher density have been described earlier as in US 5,445,934. Miniaturization of the spot size allows for a high number of data to be obtained and analyzed simultaneously, the possibility to perform replicates and with only a small amount of biological sample being necessary for the assay. Miniaturization for detection on micro-arrays is preferably associated with microfluidic substrate for separation, extraction of nucleotide molecules from a cell extract.

In a preferred embodiment, the localized area is comprised between about 10 µm² and about 1 mm², preferably between about 1 µm² and about 100 µm².

In one preferred embodiment, the capture molecules present on the micro-array are complementary to at least one part of the sequence of an amplified target nucleotide sequence present in solution. The capture molecules comprise a nucleotide sequence that is able to specifically bind the amplified target nucleotide sequence, said specific nucleotide sequence (capture portion) is also preferably separated from the surface of the solid support by a spacer arm (spacer portion) of at least about 6.8 nm or 20 nucleotides in a double stranded form, and which has no binding affinity for the amplified target molecule. In a preferred embodiment, the capture molecule is a single stranded polynucleotide containing a capture portion able to specifically bind the labeled target nucleotide molecule, and a spacer portion of at least 20 nucleotides, preferably more than 90 nucleotides. The spacer portion can be either single or double stranded DNA.

In a preferred embodiment the capture portion of the capture molecule is comprised between 15 and 100 nucleotides, more preferably between 15 and 35 nucleotides.

Detectable labels suitable for use in the present invention include any composition detectable by eletromagnetic light emission. In an embodiment, the target molecules are labeled with a fluorescent dye. The fluorescent label can be incorporated into the target by enzymatic or chemical reaction. Typical enzyme reaction includes the incorporation of nucleotide analogues into the target. Alternatively, primers labeled at their 5' end with a fluorescent dye can be incorporated into the target. Fluorochromes can also be incorporated into the targets by chemical reaction, such as the reaction of fluorescent dye bearing a N-hydroxysuccinimide (NHS) group with amines groups of the targets. Useful fluorescent dyes in the present invention include cyanine dyes (Cy3, Cy5, Cy7), fluorescein, texas red, rhodamine, green fluorescent protein. Preferably, the excitation wavelength for cyanin 3 is comprised between 540 and 558 nm with a peak at 550 nm, and the emission wavelength is comprised between 562 and 580 nm with a peak at 570 nm.

Preferably, the excitation wavelength for cyanin 5 is comprised between 639 and 659 nm, with a peak at 649 nm, and the emission wavelength is comprised between 665 and 685 nm with a peak at 670 nm. Preferably, the excitation wavelength for cyanin 7 is comprised between 733 and 753 nm with a peak at 743 nm and the emission wavelength is comprised between 757 and 777 nm with a peak at 767 nm.

Patents teaching the use of such labels include U.S. Patent Nos. 3,817,837; 3,850,752; 3,939,350; 3,996,345; 4,277,437; 4,275,149; and 4,366,241. In a preferred embodiment, the fluorescent dye is cyanin 3, cyanin 5, or cyanin 7.

The original nucleotide molecule is not necessarily labeled before the amplification but should lead to amplified labeled target molecules during the amplification step.

The amplified nucleotide molecules are able to hybridize on the capture molecules after a denaturation step. As the amplified nucleotide molecules are double stranded, in theory they should reassociate in solution much faster than that they hybridise on capture molecules fixed on a solid support, where diffusion is low and the specific binding sequence is short, thus reducing even more the rate of reaction. Therefore, it was unexpected to observe a significant signal increase on the capture molecules over multiple thermal cycles after a short period of incubation time.

In a particular embodiment the measurement is performed on bound target labeled molecules while they reassociate in a double stranded form in the solution during annealing and/or elongation of the thermal cycle.

Advantageously, the amplified target nucleotide molecules are of a limited length, preferably between 100 and 2000 bases, more preferably between 200 and 1500 bases, and still more preferably between 300 and 800 bases. This preferred requirement depends on the possibility to find primers to amplify the required sequences possibly present in the sample. Too long a target may reallocate faster and adopt secondary structures, which may inhibit the fixation on the capture molecules.

The thermal cycler is adapted to fit the support format of a 96 wells mitrotiter plate. The alternative heating and cooling is preferably obtained using a peltier element or pulsed air.

In a preferred embodiment, the light beam is a laser beam, which is focused on the surface of the lid compartment in order to excite directly the fluorescent molecules. The laser beam is preferably focused perpendicular to the surface of the lid. The emitted light is detected in the opposite direction of the excitation laser beam. The emitted light is preferably detected as a confocal light and measured after amplification by a photomultiplier. In a preferred embodiment the surface of the lid compartment is scanned by the laser beam in order to obtain a maximum light excitation of the bound targets.

In a preferred embodiment, the signal associated with a capture molecule on the lid compartment is quantified. The preferred method is the scanning of the array(s) with a scanner, which is preferably a laser confocal scanner for the detection of fluorescent labeled targets. The resolution of the image is comprised between 1 and 500 µm and preferably between 5 and 50 µm.

The window compartment is preferably scanned and, each localized area of the micro-array or each sub-compartment is subsequently measured. Preferably the scanning of the array is performed within 1 min, more preferably within 30 sec, and still more preferably within 10 sec. If reading is repeated over multiple thermal cycles, the scan of each localized area preferably is measured at the same precise moment of a temperature step.

The fact that each localized area is subsequently measured can be advantageously used to monitor the hybridization kinetics of a labeled target nucleotide molecule on the same capture molecule immobilized at different localized areas of the support, which are scanned in a time dependent manner. Since the temperature is maintained constant during the measurement, the target nucleotide molecule continues to hybridize on its capture molecule during the scanning.

In a particular embodiment, the data on the quantification of the amplified target molecules performed at different PCR cycles are processed in order to quantify the amount of nucleotide molecule present in the original solution before the amplification. The amplification cycles lead to the doubling of the target sequence in each cycle when the efficiency of the amplification is maximal. Quantification of the original nucleotide concentration is calculated from the extrapolation of the first cycle that gives a detectable value, or from a value crossing a fixed threshold. The concentration is then calculated from a reference curve, or from the data obtained on a standard molecule.

In a preferred embodiment, the data are processed in order to obtain a signal value for each of the localized areas. In another embodiment, the data are processed in order to obtain a signal value for each of the localized areas, and for the local background. The data are further processed by subtracting the background from the signal value for each of the localized area.

In a preferred embodiment, the quantification of the amount of nucleotide molecule is performed by comparing the signal value of the localized area with a fixed value.

In an alternative embodiment, the quantification of the amount of nucleotide molecule is performed by comparing the number of thermal cycles necessary to reach a fixed value (cycle threshold or CT) with the CT of a reference nucleotide molecule. The reference nucleotide molecule is preferably amplified in the same solution and detected on the same micro-array as the target nucleotide molecule.

In another embodiment, the quantification of the amount of nucleotide molecule is performed by comparing the number of thermal cycles necessary to reach a fixed value (CT) with a standard curve wherein the CTs are plotted against standard concentrations.

One example of the present invention applicable to the determination of the measurement of amplified targets from an original nucleotide molecule is presented here after.

### EXAMPLES

### Example 1. Preparation of 96-wells plate activated with aldehyde groups.

A multiwell plate in Zeonex® having 96 wells was functionalized for the presence of aldehydes groups according to the following protocol.

1. Preparation of aminated multiwell plate

Primary amines functions were introduced into the wells of a multiwell plate made of COC Zeonex 330R by ammonia plasma treatment.

Surface modifications were performed by conventional low-pressure rf plasma discharges in NH₃ plasma. The multiwell plates were positioned on trays, and the trays were placed into the chamber. The electrodes had the same size as the trays, so that the samples were covered and treated homogeneously. Distance between electrode and sample was 8 cm. After introduction of the samples in the reactor chamber (W 305 mm, H 300 mm, L 370 mm) and pumping down to 8 x 10⁻² mbar (vacuum pump: Leybold, Type D16B), the gas flow was started and the plasma discharge was performed (working pressure 0.3 mbar, 40 kHz Generator with 30 % power; discharge time 5 min).

2. Preparation of dextran polyaldehyde

2.5 g of dextran (Molecular Mass 70000; Aldrich n° D1537) was dissolved in 50 ml distilled water, then 3.594 g of potassium periodate (15.6 mmol; Aldrich n° 322423) was added. The preparation was shaken vigorously for 14 h at room temperature in the dark and dialyzed for 3 days at 4°C (cut-off of 10000; 3 times 1 litre of distilled water). The solution was centrifuged and lyophilized. 2.15 g of dextran polyaldehyde were obtained (yield: 86%), which were stored at room temperature until use.

0.125 g of dextran polyaldehyde was dissolved in 12.5 ml of phosphate buffer 0.1 M pH 6. The mixture was heated a few minutes at 60°C under vigorous stirring until complete dissolution (final solution 1 %). The solution was cooled to room temperature before use.

3. Preparation of aldehyde multiwell plate

70 µl of dextran polyaldehyde solution obtained at step 2 were added in each well of the multiwell plate carrying amino groups. The plate was covered with a lid and incubated for 2 h at room temperature, then washed 3 times with distilled water. The multiwell plate was stored under vacuum until use.

### Example 2. Capture molecule immobilization on multiwell plate

A multiwell plate in Zeonex® having 96 wells was functionalized for the presence of aldehydes according to the method described in example 1. Aminated DNA was then spotted in a micro-array pattern in the wells of the 96-wells plate derivatized with aldehyde groups. The aminated capture molecules were spotted from solutions at concentrations of 3 µM, The capture molecules were printed onto the wells using split pins (n° 1545 Genetix Limited). After the spotting, the wells were washed once for 1 min with 0.2% SDS, twice with distilled water. The wells were then incubated for 5 min with NaBH₄ solution (2.5 mg/ml of PBS 75%/ Ethanol 25%), washed twice with distilled water and dried. The 96-well plate was stored under vacuum at 4°C. One well of the obtained 96-well plate is represented as a preferred device of the invention in figure 1.

## Claims

1. A sealable reaction chamber (1) for real-time PCR configured for containing a PCR solution (3), said chamber having more than 20 capture molecules (4) immobilized on a chamber inner surface in the form of a micro-array having different localized areas, the micro array containing between 20 and 1000 spots per cm², each spot being the localized area for one capture molecule, wherein the immobilized capture molecules (4) are polynucleotide molecules having a capture portion, and a spacer portion of at least 20 nucleotides, said surface being configured to be in intermittent contact with the PCR solution (3), and comprising a window (7) permitting detection of a signal from said inner surface by a reader (6) located outside the chamber, wherein the surface of the window (7) having said localized areas has a flatness tolerance of less than 100 microns at a temperature higher than 85°C, wherein the immobilized capture molecule (4) is not labeled, and wherein the reaction chamber is configured to permit a measurement of the bound labeled amplicons to be performed in the absence of liquid.

2. The reaction chamber of claim 1, wherein the reaction chamber (1) is made of solid material resistant to 90 deg. C.

3. The reaction chamber of claim 1 intended for detection by light, wherein the light transmittance of the window (7) at the wavelength used for the detection is higher than 80%.

4. The reaction chamber of claim 1, wherein the chamber is thermoregulated with a temperature regulation device (5) being located outside the chamber.

5. The reaction chamber of claim 1, wherein the micro-array comprises more than 50 different capture molecules (4).

6. The reaction chamber of claim 1, wherein the immobilized capture molecules (4) are polynucleotide molecules having a capture portion, and a spacer portion of at least 50 nucleotides.

7. The reaction chamber of claim 1, wherein the immobilized capture molecules (4) are polynucleotide molecules having a capture portion, and a spacer portion of more than 90 nucleotides.

8. The reaction chamber of claim 1, wherein multiple capture molecules (4) are fixed on a surface having sub-compartments.

9. The reaction chamber of claim 8, wherein each sub-compartment contains different capture molecules (4).

10. The reaction chamber of claim 8, wherein several sub-compartments contain the same capture molecules (4).

11. The reaction chamber of claim 1, wherein the reaction chamber (1) has two compartments that are in fluidic contact, one compartment being intended for the PCR, the other compartment containing the window (7) for detection of the bound amplicons.

12. The reaction chamber of claim 1, wherein the reaction chamber has three compartments being in fluidic contact, two compartments being intended for the PCR and the third compartment containing the window (7) for detection of the bound amplicons.

13. The reaction chamber of claim 11 or 12, wherein at least one compartment of the reaction chamber (1) has a shape selected from the group consisting of: a tube, a well, a cavity, a reservoir.

14. The reaction chamber of claim 1, wherein the reaction chamber (1) has a shape selected from the group consisting of: a tube, a well, a cavity, a reservoir.

15. The reaction chamber of claim 13 or 14, wherein the reaction chamber (1) or a compartment of the chamber is closed by a lid (2).

16. The reaction chamber of claim 15, wherein the lid (2) serves as window for the detection of the bound amplicons.

17. The reaction chamber of claim 13 or 14, wherein the reaction chambers (1) or compartments of the chamber are the wells of a multiwell plate that are separated from each other by a pitch of 4.5 mm or a multiple thereof.

18. The reaction chamber of claim 1, wherein the reaction chambers (1) or compartments of the chamber are part of a support being a multiwell plate having at least 2 chambers (1).

19. The reaction chamber of claim 18, wherein the reaction chambers (1) or compartments of the chamber are part of a support being a multiwell plate having at least 8 chambers (1).

20. The reaction chamber of claim 1, wherein the chamber is made of a polymer selected from the group consisting of: polycarbonate (PC), polyethylene (PE), cycloolefin copolymer (COC), cyclic olefin polymer (COP), and mixtures thereof.

## Patentansprüche

1. Abdichtbare Reaktionskammer (1) für Echtzeit-PCR, die so konfiguriert ist, dass sie eine PCR-Lösung (3) enthalten kann, wobei die Kammer mehr als 20 Abfangmoleküle (4) aufweist, die auf einer Innenfläche der Kammer in Form eines Mikroarrays mit verschiedenen lokalisierten Bereichen immobilisiert sind, wobei der Mikroarray zwischen 20 und 1000 Flecken pro cm² enthält, wobei jeder Fleck dem lokalisierten Bereich für ein Abfangmolekül entspricht, wobei die immobilisierten Abfangmoleküle (4) Polynucleotidmoleküle sind, die einen Abfangbereich und einen Spacerbereich aus wenigstens 20 Nucleotiden aufweisen, wobei die Oberfläche so konfiguriert ist, dass sie in zeitweiligem Kontakt mit der PCR-Lösung (3) ist und ein Fenster (7) umfasst, das den Nachweis eines von der Innenfläche ausgehenden Signals durch ein außerhalb der Kammer befindliches Lesegerät (6) ermöglicht, wobei die Oberfläche des Fensters (7), die die lokalisierten Bereiche aufweist, eine Ebenheitstoleranz von weniger als 100 µm bei einer Temperatur von mehr als 85°C aufweist, wobei das immobilisierte Abfangmolekül (4) nicht markiert ist und wobei die Reaktionskammer so konfiguriert ist, dass sie die Durchführung einer Messung der gebundenen markierten Amplikons in Abwesenheit von Flüssigkeit ermöglicht.

2. Reaktionskammer gemäß Anspruch 1, wobei die Reaktionskammer (1) aus festem Material besteht, das bis 90°C beständig ist.

3. Reaktionskammer gemäß Anspruch 1 zum Nachweis durch Licht, wobei die Lichtdurchlässigkeit des Fensters (7) bei der zum Nachweis verwendeten Wellenlänge größer als 80% ist.

4. Reaktionskammer gemäß Anspruch 1, wobei die Kammer mit einer außerhalb der Kammer befindlichen Temperaturregelvorrichtung (5) thermisch reguliert wird.

5. Reaktionskammer gemäß Anspruch 1, wobei der Mikroarray mehr als 50 verschiedene Abfangmoleküle (4) umfasst.

6. Reaktionskammer gemäß Anspruch 1, wobei die immobilisierten Abfangmoleküle (4) Polynucleotidmoleküle sind, die einen Abfangbereich und einen Spacerbereich aus wenigstens 50 Nucleotiden aufweisen.

7. Reaktionskammer gemäß Anspruch 1, wobei die immobilisierten Abfangmoleküle (4) Polynucleotidmoleküle sind, die einen Abfangbereich und einen Spacerbereich aus mehr als 90 Nucleotiden aufweisen.

8. Reaktionskammer gemäß Anspruch 1, wobei mehrere Abfangmoleküle (4) auf einer Oberfläche mit Subkompartimenten fixiert sind.

9. Reaktionskammer gemäß Anspruch 8, wobei jedes Subkompartiment verschiedene Abfangmoleküle (4) enthält.

10. Reaktionskammer gemäß Anspruch 8, wobei mehrere Subkompartimente dieselben Abfangmoleküle (4) enthalten.

11. Reaktionskammer gemäß Anspruch 1, wobei die Reaktionskammer (1) zwei Kompartimente aufweist, die miteinander in Fluidkontakt stehen, wobei das eine Kompartiment für die PCR bestimmt ist und das andere Kompartiment das Fenster (7) zum Nachweis der gebundenen Amplikons enthält.

12. Reaktionskammer gemäß Anspruch 1, wobei die Reaktionskammer drei Kompartimente aufweist, die miteinander in Fluidkontakt stehen, wobei zwei Kompartimente für die PCR bestimmt sind und das dritte Kompartiment das Fenster (7) zum Nachweis der gebundenen Amplikons enthält.

13. Reaktionskammer gemäß Anspruch 11 oder 12, wobei wenigstens ein Kompartiment der Reaktionskammer (1) eine Form hat, die aus der Gruppe ausgewählt ist, die aus einem Rohr, einem Napf, einem Hohlraum und einem Reservoir besteht.

14. Reaktionskammer gemäß Anspruch 1, wobei die Reaktionskammer (1) eine Form hat, die aus der Gruppe ausgewählt ist, die aus einem Rohr, einem Napf, einem Hohlraum und einem Reservoir besteht.

15. Reaktionskammer gemäß Anspruch 13 oder 14, wobei die Reaktionskammer (1) oder ein Kompartiment der Kammer durch einen Deckel (2) verschlossen ist.

16. Reaktionskammer gemäß Anspruch 15, wobei der Deckel (2) als Fenster zum Nachweis der gebundenen Amplikons dient.

17. Reaktionskammer gemäß Anspruch 13 oder 14, wobei die Reaktionskammern (1) oder Kompartimente der Kammer Näpfe einer Multiwellplatte sind, die durch ein Abstandsmaß von 4,5 mm oder ein Vielfaches davon voneinander getrennt sind.

18. Reaktionskammer gemäß Anspruch 1, wobei die Reaktionskammern (1) oder Kompartimente der Kammer Teil eines Trägers sind, bei dem es sich um eine Multiwellplatte mit wenigstens 2 Kammern (1) handelt.

19. Reaktionskammer gemäß Anspruch 18, wobei die Reaktionskammern (1) oder Kompartimente der Kammer Teil eines Trägers sind, bei dem es sich um eine Multiwellplatte mit wenigstens 8 Kammern (1) handelt.

20. Reaktionskammer gemäß Anspruch 1, wobei die Kammer aus einem Polymer besteht, das aus der Gruppe ausgewählt ist, die aus Polycarbonat (PC), Polyethylen (PE), Cycloolefin-Copolymer (COC), einem Polymer eines cyclischen Olefins (COP) und Gemischen davon besteht.

## Revendications

1. Chambre de réaction étanchéifiable (1) pour une PCR (amplification en chaîne par polymérase) en temps réel configurée pour contenir une solution PCR (3), ladite chambre comportant plus de 20 des molécules de capture (4) immobilisées sur une surface interne de chambre sous la forme d'un microréseau ayant des régions localisées différentes, le microréseau contenant entre 20 et 1 000 points par cm², chaque point étant la région localisée pour une molécule de capture, où les molécules de capture (4) immobilisées sont des molécules de polynucléotide ayant une portion de capture, et une portion d'espaceur d'au moins 20 nucléotides, ladite surface étant configurée pour être en contact intermittent avec la solution PCR (3), et comprenant une fenêtre (7) permettant la détection d'un signal de ladite surface interne par un lecteur (6) situé à l'extérieur de la chambre, où la surface de la fenêtre (7) ayant lesdites régions localisées présente une tolérance de planéité inférieure à 100 microns à une température supérieure à 85 °C, où la molécule de capture (4) immobilisée n'est pas marquée, et où la chambre de réaction est configurée pour permettre la réalisation d'une mesure des amplicons marqués liés en l'absence de liquide.

2. Chambre de réaction selon la revendication 1, où la chambre de réaction (1) est constituée d'un matériau solide résistant à 90 deg. C.

3. Chambre de réaction selon la revendication 1 destinée à une détection par la lumière, où le facteur de transmission de lumière de la fenêtre (7) à la longueur d'onde utilisée pour la détection est supérieur à 80 %.

4. Chambre de réaction selon la revendication 1, où la chambre est thermorégulée avec un dispositif de régulation de température (5) situé à l'extérieur de la chambre.

5. Chambre de réaction selon la revendication 1, dans laquelle le microréseau comprend plus de 50 molécules de capture (4) différentes.

6. Chambre de réaction selon la revendication 1, où les molécules de capture (4) immobilisées sont des molécules de polynucléotide ayant une portion de capture, et une portion d'espaceur d'au moins 50 nucléotides.

7. Chambre de réaction selon la revendication 1, où les molécules de capture (4) immobilisées sont des molécules de polynucléotide ayant une portion de capture, et une portion d'espaceur de plus de 90 nucléotides.

8. Chambre de réaction selon la revendication 1, où les multiples molécules de capture (4) sont fixées sur une surface ayant des sous-compartiments.

9. Chambre de réaction selon la revendication 8, où chaque sous-compartiment contient des molécules de capture (4) différentes.

10. Chambre de réaction selon la revendication 8, où plusieurs sous-compartiments contiennent les mêmes molécules de capture (4).

11. Chambre de réaction selon la revendication 1, où la chambre de réaction (1) a deux compartiments qui sont en contact fluidique, un compartiment étant destiné à la PCR, l'autre compartiment contenant la fenêtre (7) pour la détection des amplicons liés.

12. Chambre de réaction selon la revendication 1, où la chambre de réaction a trois compartiments en contact fluidique, deux compartiments étant destinés à la PCR et le troisième compartiment contenant la fenêtre (7) pour la détection des amplicons liés.

13. Chambre de réaction selon la revendication 11 ou 12, où au moins un compartiment de la chambre de réaction (1) a une forme choisie dans le groupe constitué par : un tube, un puits, une cavité, un réservoir.

14. Chambre de réaction selon la revendication 1, où la chambre de réaction (1) a une forme choisie dans le groupe constitué par : un tube, un puits, une cavité, un réservoir.

15. Chambre de réaction selon la revendication 13 ou 14, où la chambre de réaction (1) ou un compartiment de la chambre est fermé par un couvercle (2).

16. Chambre de réaction selon la revendication 15, où le couvercle (2) sert de fenêtre pour la détection des amplicons liés.

17. Chambre de réaction selon la revendication 13 ou 14, où les chambres de réaction (1) ou compartiments de la chambre sont les puits d'une plaque à puits multiples qui sont séparés les uns des autres par un espace de 4,5 mm ou d'un multiple de celui-ci.

18. Chambre de réaction selon la revendication 1, où les chambres de réaction (1) ou compartiments de la chambre font partie d'un support qui est une plaque à puits multiples comportant au moins 2 chambres (1).

19. Chambre de réaction selon la revendication 18, où les chambres de réaction (1) ou compartiments de la chambre font partie d'un support qui est une plaque à puits multiples comportant au moins 8 chambres (1).

20. Chambre de réaction selon la revendication 1, où la chambre est constitué d'un polymère choisi dans le groupe constitué par : le poly(carbonate) (PC), le poly(éthylène) (PE), un copolymère de cyclooléfine (COC), un polymère d'oléfine cyclique (COP) et leurs mélanges.
